## Europäisches Patentamt
## European Patent Office
## Office européen des brevets

(11) Numéro de publication: **0 176 406**
**B1**

# FASCICULE DE BREVET EUROPÉEN

(45) Date de publication du fascicule du brevet:
**02.08.89**

(51) Int. Cl.⁴: **H 04 N 9/093**

(21) Numéro de dépôt: **85401710.0**

(22) Date de dépôt: **03.09.85**

(54) **Dispositif de correction des défauts d'uniformité induits dans les signaux issus d'une caméra de télévision par les variations de vitesse d'analyse.**

(30) Priorité: **07.09.84 FR 8413812**

(43) Date de publication de la demande:
**02.04.86 Bulletin 86/14**

(45) Mention de la délivrance du brevet:
**02.08.89 Bulletin 89/31**

(84) Etats contractants désignés:
**DE GB IT NL**

(56) Documents cité:
**FR-A-2 372 556**
**FR-A-2 501 949**

(73) Titulaire: **THOMSON VIDEO EQUIPEMENT, 94, rue du Fossé Blanc, F-92230 Gennevilliers (FR)**

(72) Inventeur: **Desmons, Gérard, THOMSON- CSF SCPI- 173 bld Haussmann, F-75379 Paris Cedex 08 (FR)**
Inventeur: **Fauquet, Jean- Noel, THOMSON- CSF SCPI- 173 bld Haussmann, F-75379 Paris Cedex 08 (FR)**

(74) Mandataire: **Turlèque, Clotilde, THOMSON- CSF SCPI, F-92045 PARIS LA DEFENSE CEDEX 67 (FR)**

EP 0 176 406 B1

## Description

L'invention se rapporte aux caméras de télévision et plus particulièrement à la correction des variations d'uniformité, en particulier du noir et du blanc, résultant des réglages, par variations de vitesse d'analyse, de la géométrie et éventuellement des convergences de trois images primaires d'une caméra vidéo.

Dans une caméra couleur tri-tubes par exemple, la lumière résultant de la prise de vue est divisée par un système optique pour former trois images dites "primaires" sur les cibles des trois tubes, rouge vert, et bleu. Ces images sont alors détectées. Une difficulté de ce système est le cadrage de ces images et la superposition des trois analyses, c'est-à-dire le passage des spots au même instant sur les trois images du même point de l'objet. Les réglages fins des cadrages et des distorsions de géométrie des balayages et de l'optique peuvent être suffisants, mais la précision demandée est telle que ces réglages de géométrie ne sont pas maintenus au cours du temps. En ce qui concerne les réglages de remise en superposition (convergence), il existe des systèmes de réglage pour modifier les balayages des tubes les uns par rapport aux autres afin que les signaux résultant puissent par superposition restituer une image de bonne qualité. En général la correction de géométrie, calculée pour le canal vert par comparaison avec une mire électronique, est appliquée aux trois voies, verte, rouge et bleue. Puis les corrections supplémentaires de convergence, calculées par rapport à la voie verte prise comme référence sont appliquées aux voies rouge et bleue.

Il existe actuellement des systèmes de réglage automatique, gérés par des microprocesseurs, qui modulent les vitesses de balayage ligne et trame de chacun des trois tubes en fonction des corrections calculées. Un exemple d'un tel système et de la mire de référence associée sont décrits dans un article intitulé "Procédé de superposition automatique pour caméra de télévision couleur trois tubes" publié dans la revue technique THOMSON-CSF, vol. 14, n° 4 de Décembre 1982 et, artiellement dans les demandes de brevet français FR-A-2 498 858 et FR-A-2 526 963 au mom de la Demanderesse. Dans ce système des signaux de correction établis après un cycle de mesure sont superposés aux signaux de balayage horizontal et vertical en dents de scie des tubes analyseurs pour accélérer ou ralentir la vitesse du spot d'analyse et obtenir ainsi un cadrage et une superposition des 3 couleurs convenables. Bien que filtrés de manière analogique ou numérique ou lissés par le calcul, ces signaux de correction induisent des discontinuités dans les dents de scie de balayage. Or ces discontinuités sont à l'origine de taches que l'on peut voir sur les images et qui sont renforcées par les traitements vidéo ultérieurs du type expansion des gris, asservissement automatique du niveau de noir, renforcement des contours, etc...

L'invention a pour objet un dispositif de correction de ces défauts d'uniformité induits dans les signaux vidéo issus d'une caméra de télévision par les variations de vitesse du spot d'analyse créées pour la correction des défauts de géométrie et de convergence, caractérisé en ce qu'il comprend un circuit de détection des variations de vitesse du spot d'analyse dans au moins une direction de balayage de la cible d'au moins un tube analyseur, et des moyens pour modifier les signaux vidéo résultant de l'analyse en fonction des variations de vitesse détectées.

L'invention sera mieux comprise et d'autres caractéristiques apparaîtront à l'aide de la description qui suit en référence aux figures annexées.

- La figure 1 est le schéma synoptique d'un mode de réalisation du dispositif de correction suivant l'invention.
- La figure 2 est le schéma synoptique d'un second mode de réalisation du dispositif de correction suivant l'invention.

Indépendamment des défauts d'uniformité induits dans le signal issu d'une caméra de télévision par les variations de vitesse d'analyse, il existe par ailleurs d'autres défauts d'uniformité: en effet l'analyse d'une image de luminance et de teinte uniformes devrait donner des signaux primaires de valeurs constantes. En pratique ce n'est pas le cas pour diverses raisons liées à des défauts dans les optiques, à une sensibilité non uniforme des analyseurs, à la lumière parasite etc... Une correction de ce type de défauts appelés taches, est habituellement faite en ajoutant, aux signaux vidéo, des signaux de correction produits à la fréquence de ligne et à la fréquence de trame pour la correction de taches au noir et en multipliant le signal vidéo par des signaux de correction pour la correction de taches au blanc. Le réglage de ces signaux de correction peut être soit manuel, soit automatique à partir d'une mire, soit une combinaison des deux. Cette correction dite correction de taches est réalisée directement sur les signaux issus des tubes analyseurs et permet donc de maintenir les niveaux haut ("blanc") et bas ("noir") du signal vidéo à des valeurs constantes pour chacun des trois tubes.

Mais, comme indiqué ci-dessus, en plus de ces taches que l'on corrige de façon traditionnelle, les taches liées aux variations de vitesse du spot d'analyse créées à la suite de la correction automatique de géométrie et de convergence par un système automatique de correction viennent s'y ajouter, ces taches étant beaucoup plus nettes et beaucoup plus délimitées que les premières. Ce phénomène est particulièrement sensible dans le sens vertical d'image. En effet, dans le sens horizontal, la correction de balayage est effectuée à un rythme très supérieur à la fréquence de balayage horizontal, ce qui fait que les signaux de correction sont lissés dans les bobines de déflection horizontale. Ce lissage est nettement moins important dans le sens vertical, car ces variations de vitesse créent des variations de l'interlignage de la trame. Ces défauts existaient antérieurement mais l'apport d'automatismes et de corrections numériques de géométrie conduisent à des taches dont la forme géométrique, liée à la manière de mesurer les erreurs et de les corriger, est visuellement défavorable. En effet, les signaux de correction résultant de l'analyse conduisent à des variations par pas qui peuvent être importantes. Le lissage a permis de réduire ces variations, mais ces incréments sont visibles sur l'image, en particulier les transitions entre les motifs élémentaires d'analyse dans les zones uniformes. En effet, si à un instant donné la vitesse du spot est augmentée par rapport à l'instant précédent et que la quantité d'électricité à décharger sur la cible est la même (teinte et luminance égales à celles de l'instant précédent) le signal résultant de l'analyse augmente, ce qui se traduit par une surbrillance dans l'image restituée. Inversement lorsque la vitesse du spot diminue, le signal vidéo analysé diminue.

Pour résoudre ce problème, le dispositif objet de l'invention détecte les variations dans la vitesse de balayage d'au moins un spot d'analyse, par exemple celui de la voie verte puisque les variations dans les deux autres voies sont les mêmes aux corrections différentielles de convergence près. Ces variations correspondent à la dérivée du signal de balayage du spot d'analyse. Ce signal est en effet identique en phase et en forme aux défauts constatés sur les tubes. Ce signal est ensuite additionné, avec un gain et un signe convenables aux signaux de correction de taches au noir et au blanc des trois voies ou directement aux signaux vidéo corrigés.

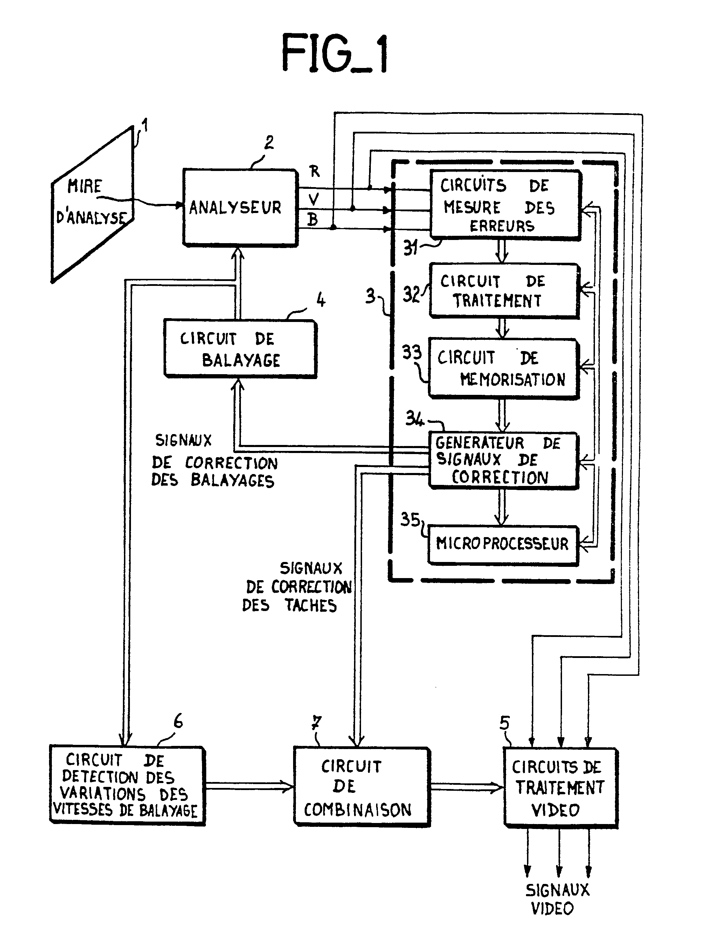

La figure 1 est un schéma synoptique du dispositif suivant l'invention. Une mire d'analyse 1 est associée à un analyseur 2, par exemple un analyseur tri-tubes comme indiqué ci-dessus; cet analyseur fournit trois signaux vidéo de couleurs, R, V et B. Ces trois signaux sont appliqués à un circuit automatique de réglage 3 qui comporte un circuit de mesure des erreurs pour détecter les défauts de géométrie et de convergence, 31, les écarts détectés durant un cycle de mesure étant traités dans un circuit de traitement 32 qui établit les valeurs numériques de correction nécessaires. Ces valeurs de correction sont mises en mémoire dans un circuit de mémorisation 33. Un générateur de signaux de correction 34 fournit, à partir des valeurs numériques de correction, les signaux nécessaires pour commander les circuits de balayage horizontal et vertical des trois tubes rouge, vert et bleu. Un microprocesseur 35 gère l'ensemble de ces circuits 31, 32, 33, 34. Dans un système où la correction de taches (habituelle) est également réalisée par le circuit de correction automatique, le générateur de signaux de correction fournit également les signaux de correction de taches au noir et au blanc pour les trois tubes. Les signaux de correction de balayage sont appliqués à l'entrée de commande des circuits de balayage 4, et les signaux de correction de taches au circuit de traitement vidéo 5 qui reçoit par ailleurs les signaux vidéo issus des tubes. Les circuits de balayage commandent les tubes de l'analyseur 2 et le circuit de traitement vidéo 5 fournit les signaux vidéo issus de la camera. Les circuits décrits jusqu'à présent sont les circuits classiques. Le circuit selon l'invention comporte en outre un circuit de détection des variations des vitesses de balayage 6. Les signaux caractéristiques des variations de vitesse de balayage issus de ce circuit 6 sont appliqués à l'entrée d'un circuit de combinaison 7 placé entre les sorties de signaux de correction de taches du générateur 34 et les entrées de correction de taches du circuit de traitement vidéo 5. Ainsi, ces signaux caractéristiques des variations de vitesse de balayage sont combinés signaux de correction de taches habituels.

Le circuit de détection des variations de vitesse de balayage peut être réalisé de différentes manières. Ce peut être un circuit de différenciation du signal de balayage, ou un circuit de corrélation ligne à ligne du signal de balayage, en particulier pour détecter les variations de vitesse de balayage dans un sens vertical, ou tout autre mode de réalisation convenable.

Dans le mode de réalisation particulier du circuit de correction de géométrie et de convergence décrit dans l'article et les demandes de brevets indiquées ci-dessus, le circuit de traitement 32 associé au microprocesseur 35 calcule des incréments de tension de commande de balayage, qui sont appliquées directement après conversion numérique-analogique aux circuits de balayage 4. Ces incréments donnent naissance aux changements de pentes des dents de scie de balayage, et sont également ceux qui induisent les taches sur les images.

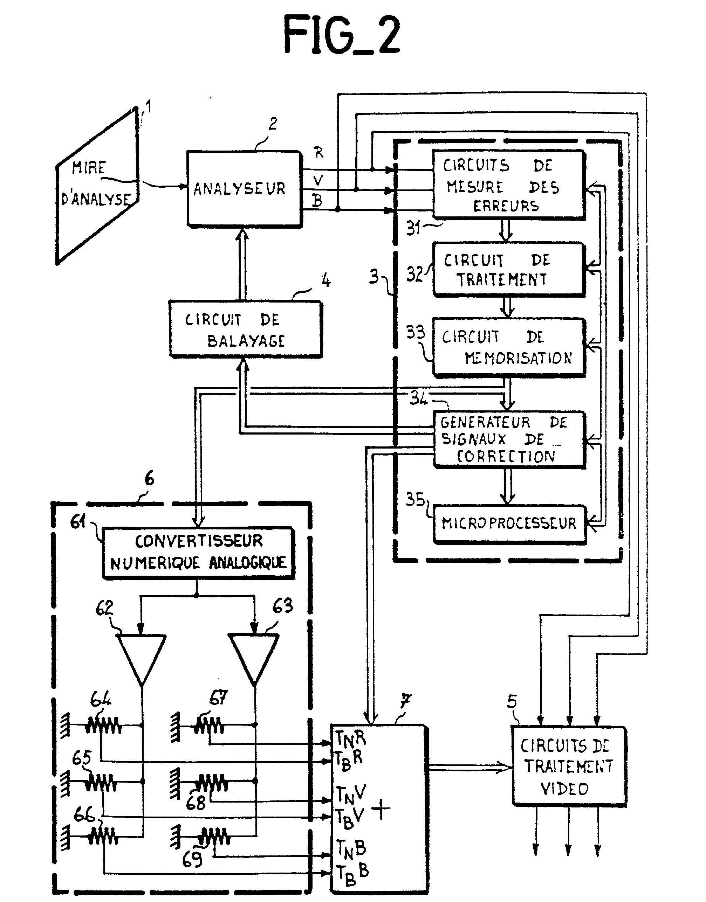

Dans un mode de réalisation particulier de l'invention décrit ci-après en référence à la figure 2, ces incréments sont extraits directement à la sortie du circuit de mémorisation 33 et appliqués après conversion numérique-analogique, et sans autre traitement qu'un éventuel ajustement d'amplitude, à l'amplificateur vidéo de sortie qui reçoit les signaux vidéo.

La figure 2 représente un schéma de ce deuxième mode de réalisation du dispositif suivant l'invention, où les mêmes éléments que sur la figure 1 ont été désignés par les mêmes repères. Le circuit de détection "des variations de vitesse de balayage" 6 comporte une entrée reliée à la sortie du circuit de mémorisation 33. Cette entrée est reliée à l'entrée d'un convertisseur numérique-analogique 61, avec le signal d'horloge associé, et la sortie de signal analogique de ce convertisseur est reliée respectivement à des entrées de deux amplificateurs opérationnels 62 et 63. Ces amplificateurs sont branchés de façon à fournir à leurs sorties des signaux ayant un gain et un signe convenables, fonction de la suite du traitement dans les circuits de traitement vidéo. Le signal de sortie de l'amplificateur 62 est appliqué à trois potentiomètres 64, 65 et 66 dont les réglages sont fonction des niveaux respectifs des trois signaux vidéo, pour la correction de taches au noir dans les trois voies R, V, B: $T_NR$, - $T_NV$, $T_NB$. De même le signal de sortie de l'amplificateur 63 est appliqué à trois potentiomètres 67, 68, 69 dont les réglages sont également fonction des niveaux respectifs des trois signaux vidéo, pour la correction de taches au blanc dans les trois voies R, V, B: $T_BR$, $T_BV$, $T_BB$.

Le circuit de combinaison 7 est alors constitué simplement d'additionneurs pour additionner les signaux de correction de taches habituels au blanc et au noir des trois voies issus du générateur de signaux de correction 34 aux signaux de correction supplémentaires ainsi élaborés.

En pratique, les défauts constatés étant surtout liés aux discontinuités de vitesse de balayage vertical induits par la correction de géométrie commune aux trois voies, une correction basée sur les incréments de tension de balayage vertical appliqués simultanément aux trois voies peut être suffisante.

Mais l'invention n'est pas limitée à ces modes de réalisation particuliers. En particulier, si les corrections différentielles supplémentaires apportées à la vitesse de balayage vertical pour les tubes rouge et bleu aux fins de correction de convergence induisent également des défauts significatifs, ces variations supplémentaires peuvent elles aussi être détectées et ajoutées aux signaux de correction de taches déjà élaborés pour les voies rouge et verte.

De même, il a été indiqué ci-dessus que les taches étaient surtout créées par les variations de vitesse de balayage vertical. Mais si les variations de vitesse de balayage horizontal créent des taches visibles sur l'image, la même correction peut être effectuée par détection des variations de vitesse de balayage horizontal dans une voie, ou dans les trois voies et addition des signaux détectés avec un gain et un signe convenables aux signaux de correction de taches au blanc et au noir, ces signaux de correction supplémentaires étant alors à des fréquences sous-multiples de la fréquence ligne.

Enfin, on a supposé dans la description ci-dessus que l'analyseur était un analyseur tri-tubes, chacun de ces tubes étant commandé par un signal de balayage horizontal et un signal de balayage vertical. Cette description n'est pas limitative et l'invention s'applique également à une caméra dans laquelle l'analyseur trichrome ne comporte qu'un seul tube. Dans ce cas il n'y a bien sûr qu'un balayage horizontal et un balayage vertical et la détection des variations d'analyse est faite pour ce seul tube, puisqu'il n'y a pas de problème de convergence mais seulement de cadrage (ou géométrie).

## Revendications

1. Dispositif de correction des défauts d'uniformité induits dans les signaux issus d'une caméra de télévision par les variations de vitesse d'analyse créées pour la correction des défauts de géométrie et de convergence, caractérisé en ce qu'il comprend un circuit de détection (6) des variations de vitesse du spot d'analyse dans au moins une direction de balayage de la cible d'au moins un tube analyseur, et des moyens (5, 7) pour modifier les signaux vidéo résultant de l'analyse en fonction des variations de vitesse détectées.

2. Dispositif selon la revendication 1, dans lequel les mêmes variations de vitesse d'analyse sont induites, pour la correction des erreurs de géométrie détectées dans une voie prise comme référence, sur les spots des trois tubes analyseurs d'une caméra tri-tubes et dans lequel les défauts d'uniformité les plus sensibles sont créés par les variations de vitesse de balayage vertical, caractérisé en ce que le circuit de détection (6) détecte les variations de vitesse de balayage vertical du spot du tube analyseur de la voie prise comme référence.

3. Dispositif selon l'une des revendications 1 et 2, caractérisé en ce que, la correction de géométrie et de convergence étant réalisée par accroissement ou diminution de la tension de commande de balayage, le circuit de détection (6) prélève directement ces variations en amont de l'entrée de commande du circuit de balayage (4).

4. Dispositif selon la revendication 3, associé à un circuit automatique de correction dans lequel les mesures des défauts de géométrie et de convergence et l'élaboration des variations de tension de commande de balayage sont commandées par un microprocesseur (35) associé à une mémoire de correction (33) remise à jour pendant les cycles de mesures et lue en régime de fonctionnement normal, caractérisé en ce que le circuit de détection des variations de vitesse d'analyse (6) prélève directement en sortie de la mémoire de correction (33) les valeurs numériques des variations commandées.

5. Dispositif selon l'une quelconque des revendications précédentes, associé à un circuit de correction de taches au noir et au blanc de chacun des signaux issus de l'analyse, caractérisé en ce que les moyens pour modifier les signaux vidéo résultant de l'analyse comportent un circuit de combinaison (7) permettant d'ajouter aux signaux de correction de taches au noir et au blanc habituels au moins un signal caractéristique des variations de vitesse du spot d'analyse pour chacun des tubes d'analyse.

## Patentansprüche

1. Vorrichtung zur Korrektur der Gleichförmigkeitsfehler, die in den von einer Fernsehkamera erzeugten Signalen durch die Analysegeschwindigkeitsänderungen eingeführt sind, welche zur Korrektur der Geometrie- und Konvergenzfehler erzeugt werden, dadurch gekennzeichnet, daß sie eine Schaltung (6) zur Erfassung der Geschwindigkeitsänderungen des Analyseflecks in wenigstens einer Ziel-Abtastrichtung wenigstens einer Analyseröhre sowie Mittel (5, 7) umfaßt, um die aus der Analyse resultierenden Videosignale in Abhängigkeit von der erfaßten Geschwindigkeitsänderungen zu verändern.

2. Vorrichtung nach Anspruch 1, in welcher die selben Analyse-Geschwindigkeitsänderungen für die Korrektur der in einem als Referenz angenommenen Weg erfaßten Geometriefehler an den Flecken der drei Analyseröhren einer Dreiröhrenkamera eingeführt werden und in welcher die ausgeprägtesten Gleichförmigkeitsfehler von den Geschwindigkeitsveränderungen der senkrechten Ablenkung verursacht sind, dadurch gekennzeichnet, daß die Erfassungsschaltung (6) die Geschwindigkeitsveränderungen der senkrechten Fleck-Ablenkung der Analysenröhre des als Referenz angenommenen Weges erfaßt.

3. Vorrichtung nach Anspruch 1 oder 2, dadurch gekennzeichnet, daß - wenn die Geometrie- und Konvergenzkorrektur durch Zunahme oder Verringerung der Ablenksteuerspannung erfolgt die Erfassungsschaltung (6) diese Veränderungen vor dem Steuereingang der Ablenkschaltung (4) unmittelbar abgreift.

4. Vorrichtung nach Anspruch 3, der eine automatische Korrekturschaltung zugeordnet ist, in welcher die Messungen der Geometrie- und Konvergenzfehler sowie die Bestimmung der Änderungen der Ablenksteuerspannung durch einen Mikroprozessor (35) gesteuert sind, welchem ein Korrekturspeicher (33) zugeordnet ist, der während der Meßzyklen aktualisiert und bei Normalbetrieb ausgelesen wird, dadurch gekennzeichnet, daß die Schaltung (6) zur Erfassung der Veränderungen der Analysengeschwindigkeit am Ausgang des Korrekturspeichers (33) die digitalen Werte der gesteuerten Änderungen unmittelbar abgreift.

5. Vorrichtung nach einem der vorstehenden Ansprüche, welcher eine Schaltung zur Korrektur der Schwarz- und Weißflecken jedes der aus der Analyse stammenden Signale zugeordnet ist, dadurch gekennzeichnet, daß die Mittel zum Verändern der aus der Analyse stammenden Videosignale eine Kombinationsschaltung (7) umfaßt, welche es ermöglicht, den herkömmlichen Signalen zur Korrektur der Schwarz- und Weißflecken wenigstens ein Signal hinzuzufügen, das für die Geschwindigkeitsänderungen des Analyseflecks für jede der Analyseröhren charakteristisch ist.

## Claims

1. A device for the correction of uniformity faults induced in the output signals of a television camera by variations in the analysis speed created for the correction of faults in geometry and convergence, characterized in that it comprises a detection circuit (6) for variations in speed of an analysis spot in at least one direction of sweep of the target of at least one analysing tube, and means (5 and 7) in order to modify the video signals resulting from the analysis as a function of the variations in speed which are detected.

2. The device as claimed in claim 1, in which the same variations in speed of analysis are induced, for the correction of errors in geometry detected in a path taken for reference, on the spots of three analysing tubes of a tri-tube camera, and in which the uniformity faults which are most significant are created by variations in the vertical sweep speed, characterized in that the detection circuit (6) detects variations in vertical sweep speed of the spot of an analysing tube of the path taken for reference.

3. The device as claimed in claim 1 and claim 2, characterized in that, the geometry and convergence being performed by an increase or a decrease in the control voltage for the sweep, the detection circuit (6) directly samples these variations on the input side of the control input of the sweep circuit (4).

4. The device as claimed in claim 3, associated with an automatic correction circuit in which the measure of the geometry and convergence faults and the elaboration of the variations in the control sweep voltage are controlled by a microprocessor (35) associated with a correction memory (33) updated during measure cycles and read during normal functioning, characterized in that the circuit for the detection of variations in the speed of analysis (6) directly samples at the output of the correction memory (33) digital values of the variations produced by the control.

5. The device as claimed in any one of the preceding claims associated with a black and white spot correction circuit in each of the signals coming from such analysis, characterized in that the means for modifying the video signals resulting from the analysis comprise a combination circuit (7) making it possible to add at least one signal characteristic of the variations in speed of the analysis spot for each of the analysis tubes to the normal black and white spot corrections signals.

# FIG_1

MIRE
D'ANALYSE
1

ANALYSEUR
2

R
V
B

CIRCUITS DE
MESURE DES
ERREURS
31

CIRCUIT DE
BALAYAGE
4

3

CIRCUIT DE
TRAITEMENT
32

CIRCUIT DE
MEMORISATION
33

SIGNAUX
DE CORRECTION
DES BALAYAGES

GENERATEUR DE
SIGNAUX DE
CORRECTION
34

MICROPROCESSEUR
35

SIGNAUX
DE CORRECTION
DES TACHES

CIRCUIT DE
DETECTION DES
VARIATIONS DES
VITESSES DE BALAYAGE
6

CIRCUIT
DE
COMBINAISON
7

CIRCUITS DE
TRAITEMENT
VIDEO
5

SIGNAUX
VIDEO

# FIG_2